# EUROPEAN PATENT APPLICATION

(11) **EP 2 871 697 A1**
(43) Date of publication of application: **13.05.2015**
(21) Application number: 13812535.6
(22) Date of filing: 08.07.2013
(51) Int. Cl.: H01M 4/96, C08J 3/20, C08J 5/18, C08K 3/04, C08K 7/00, H01B 1/24, H01M 8/10

(54) **SHEET, ELECTRODE AND FUEL CELL**

(30) Priority: 06.07.2012 JP 2012152336; 01.11.2012 JP 2012242022
(71) Applicant: Daikin Industries, Ltd., Osaka-shi, Osaka 530-8323 (JP)
(72) Inventor: YOSHIMOTO Hiroyuki, Kita-ku Osaka-shi Osaka530-8323 (JP); CHAEN Shinichi, Kita-ku Osaka-shi Osaka530-8323 (JP); KAWAHARA Kazuya, Kita-ku Osaka-shi Osaka530-8323 (JP); SHIBUYA Yoshiyuki, Kita-ku Osaka-shi Osaka530-8323 (JP); SUKEGAWA Masamichi, Kita-ku Osaka-shi Osaka530-8323 (JP)
(74) Representative: Hoffmann Eitle
(86) International application number: PCT/JP2013/068681
(87) International publication number: WO 2014/007397

(57) **Abstract**

The present invention aims to provide a sheet having high conductivity in the thickness direction and excellent breathability, water repellency, corrosion resistance, and flexibility so as to be suitably used for an electrode of fuel cells and the like. The present invention also aims to provide an electrode and a fuel cell. The present invention provides a sheet containing polytetrafluoroethylene, carbon black, and graphite, the polytetrafluoroethylene having a standard specific gravity of 2.14 to 2.28, a total amount of the carbon black and the graphite being more than 35% by mass of a total amount of the polytetrafluoroethylene, the carbon black, and the graphite.

## Description

### TECHNICAL FIELD

The present invention relates to a sheet, an electrode, and a fuel cell. More specifically, the present invention relates to a sheet that is suitably used for an electrode in a fuel cell, an electrode formed of the sheet, and a fuel cell including the electrode.

### BACKGROUND ART

A fuel cell commonly includes a membrane electrode assembly (MEA) including electrodes (anode and cathode) where a reaction for power generation occurs and an electrolyte membrane that serves as an ion conductor between the anode and the cathode. The fuel cell is composed of a cell, as a unit, in which such a MEA is sandwiched between separators. Here, the electrodes are formed of an electrode base material (also referred to as a gas diffusion electrode or a current collector) that promotes gas diffusion and collects/feeds electricity, and an electrode catalyst layer where an electrochemical reaction actually occurs. For example, at an anode of a solid polymer-type fuel cell, a fuel (e.g., hydrogen gas) is reacted in a catalyst layer of the anode to generate protons and electrons. The electrons are conducted to an electrode base material, and the protons are conducted to a polymer solid electrolyte. Accordingly, the anode is required to be excellent in a gas diffusion property (breathability), electron conductivity (electric conductivity), and ion conductivity. At a cathode, oxidizing gas (e.g., oxygen, air) is reacted in a catalyst layer of the cathode with the protons conducted from the polymer solid electrolyte and the electrons conducted from the electrode base material to generate water. Since the generated water disturbs approach of hydrogen or air to the electrolyte membrane, the cathode is required to efficiently drain the generated water (water repellency, water drainage), while being required to be excellent in a gas diffusion property (breathability), electron conductivity, and ion conductivity. Moreover, the electrodes need to have excellent corrosion resistance as they are exposed to water, oxygen, and a high current at high temperatures.

As an electrode material used for fuel cells and the like, polytetrafluoroethylene fine powder blended with a conductive filler is now drawing attentions. Conventional commercial products thereof however have problems that molding by paste extrusion is difficult and that conductivity is too low to be used for an electrode. Commonly, in production of an electrode from a conductive sheet, a mixture of polytetrafluoroethylene and a conductive filler is blended with an appropriate extrusion aid and then paste-extruded. The extruded product is rolled to be formed into a sheet. This method, however, has a problem that, though the conductivity of the sheet in the rolling direction is high, the conductivity of the sheet in the thickness direction is poor as it has an almost one-digit higher volume resistivity compared to that in the rolling direction.

Specific examples using a mixture of polytetrafluoroethylene and a conductive filler include an electrode made from polytetrafluoroethylene and carbon black (see Patent Literature 1). This electrode, however, problematically has insufficient conductivity.

Also disclosed is an electrode made from a fabric of carbon fibers and polytetrafluoroethylene (see Patent Literature 2). This electrode, however, is easily cracked and poor in load resistance. In addition, the carbon fibers are problematically expensive.

Moreover, disclosed is polytetrafluoroethylene-containing powder containing polytetrafluoroethylene particles prepared by emulsion polymerization, carbon black, and a conductive material (e.g., graphite, carbon fibers, and/or metallic powder) other than the carbon black at a specific ratio (see Patent Literature 3). Patent Literature 3 discloses that the polytetrafluoroethylene-containing powder is prepared by co-coagulation of polytetrafluoroethylene particles, carbon black, and a conductive material and that such powder is favorably used for an electrode excellent in conductivity (especially in the thickness direction), load resistance, and cost performance.

### CITATION LIST

### - Patent Literature

Patent Literature 1: JP-A H05-166520
Patent Literature 2: JP-A H07-201346
Patent Literature 3: Japanese Patent No. 4000915

### SUMMARY OF INVENTION

### - Technical Problem

As described above, various materials which may be suitably used for electrodes of fuel cells and the like have been studied. In order to achieve various required characteristics at a higher level, the materials still have room to be improved.

In particular, strongly demanded is realizing a conductivity higher than ever especially in the thickness direction, while maintaining the breathability, water repellency, and corrosion resistance.

In production of cells, it is important to provide electrodes with appropriate flexibility so as not to damage the electrodes upon bonding thereof to a catalyst layer or a separator.

The present invention was devised in consideration of the state of the art. The present invention aims to provide a sheet having high conductivity in the thickness direction and excellent breathability, water repellency, corrosion resistance, and flexibility so as to be suitably used for an electrode of fuel cells and the like. The present invention also aims to provide an electrode and a fuel cell.

### - Solution to problem

The present inventors have intensively studied about sheets favorably used for electrodes of fuel cells and the like to find out that, in a sheet containing polytetrafluoroethylene, carbon black, and graphite, the conductivity in the thickness direction is effectively improved when the total amount of the carbon black and the graphite is set to more than 35% by mass of the total amount of the polytetrafluoroethylene, the carbon black, and the graphite. The present inventors found out that such a sheet has all of breathability, water repellency, corrosion resistance, and appropriate flexibility. They also found out that such a sheet is very much useful as an electrode material for fuel cells and the like, thereby arriving at the present invention.

The present invention provides a sheet containing polytetrafluoroethylene, carbon black, and graphite, the polytetrafluoroethylene having a standard specific gravity of 2.14 to 2. 28, a total amount of the carbon black and the graphite being more than 35% by mass of a total amount of the polytetrafluoroethylene, the carbon black, and the graphite.

The carbon black and the graphite preferably have a mass ratio of 99/1 to 30/70.

The polytetrafluoroethylene is preferably a tetrafluoroethylene homopolymer or a modified polytetrafluoroethylene including a polymerization unit derived from a modified monomer in an amount of 0.02% by mass or less of the total polymerization units.

The polytetrafluoroethylene preferably has a standard specific gravity of 2.14 to 2.22.

The polytetrafluoroethylene, the carbon black, and the graphite are preferably mixed by co-coagulation.

The carbon black preferably has an average particle size of 70 nm or less.

The graphite preferably has an average particle size of 50 µm or less.

The graphite preferably has a scale shape or a plate shape.

The present invention also provides an electrode including the sheet.

The present invention also provides a fuel cell including the electrode.

The present invention is specifically described in the following.

The sheet of the present invention contains polytetrafluoroethylene [PTFE]. Containing polytetrafluoroethylene provides the sheet with excellent water repellency, corrosion resistance, and flexibility.

The polytetrafluoroethylene refers to a tetrafluoroethylene homopolymer [TFE homopolymer] and/or a modified polytetrafluoroethylene (modified PTFE) which have a fibrillation property and non-melt processability. The "modified PTFE", as used herein, refers to a copolymer that contains tetrafluoroethylene (TFE) and a slight amount of a modified monomer as a monomer component and is obtainable by copolymerization. Here, in the case of limitatively referring to the TFE homopolymer, not to a modified PTFE, the term "polytetrafluoroethylene" is not used.

The polytetrafluoroethylene is preferably a tetrafluoroethylene homopolymer or a modified polytetrafluoroethylene including a polymerization unit derived from a modified monomer in an amount of 0.02% by mass or less of the total polymerization units, because such polytetrafluoroethylene is easily made porous and fibrillated so as to be easily made into a sheet even if the amount of carbon black and graphite is increased.

In a case where the polytetrafluoroethylene is a modified PTFE, the modified monomer is not particularly limited as long as it is copolymerizable with TFE. Examples thereof include perfluoroolefins (e.g., hexafluoropropylene [HFP]); chlorotrifluoroethylene [CTFE]; hydro fluoroolefins (e.g., trifluoroethylene); and perfluoro vinyl ether.

The perfluoro vinyl ether is not particularly limited, and examples thereof include unsaturated perfluoro compounds represented by Formula (I):

CF₂=CF-ORf (I)

wherein Rf represents a perfluoro group. The term "perfluoro group" as used herein refers to a hydrocarbon group in which all the hydrogen atoms bonded to a carbon atom are substituted with fluorine atoms. The perfluoro group may contain an ether bond.

Examples of the perfluoro vinyl ether include perfluoro (alkyl vinyl ether) [PAVE] represented by the formula (I) in which Rf represents a C₁-C₁₀ perfluoro alkyl group. The perfluoro alkyl group preferably has a carbon number of 1 to 5.

Examples of the perfluoroalkyl group in the PAVE include perfluoromethyl, perfluoroethyl, perfluoropropyl, perfluorobutyl, perfluoropentyl, and perfluorohexyl groups. Preferred among these is a perfluoropropyl group.

Examples of the perfluoro vinyl ether include perfluoro(alkoxyalkyl vinyl ether) and perfluoro (alkylpolyoxyalkylene vinyl ether) represented by Formula (I) in which Rf represents a C₄-C₉ perfluoro(alkoxyalkyl) group, an organic group represented by the following formula: 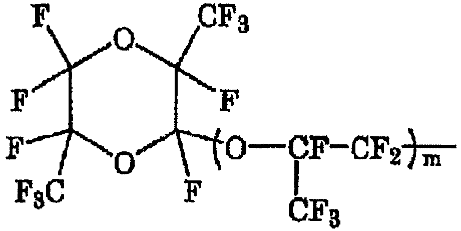 wherein m represents 0 or an integer of 1 to 4, or an organic group represented by the following formula: 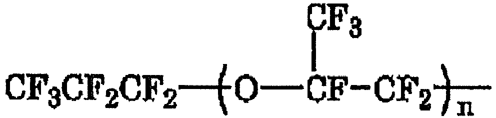 wherein n represents an integer of 1 to 4.

As the modified PTFE, there may be mentioned, for example, a modified PTFE having a core-shell structure in addition to a modified PTFE resin that is singly constituted.

The core-shell structure is a conventionally known structure and is a structure of a primary particle in an aqueous dispersion preparable by a method disclosed in US Patent No. 6841594 or the like. For example, the core-shell structure can be obtained by first polymerizing tetrafluoroethylene [TFE] and, if needed, a modified monomer to prepare a core part (TFE homopolymer or modified PTFE) and then polymerizing tetrafluoroethylene and, if needed, a modified monomer to prepare a shell part (TFE homopolymer or modified PTFE).

In particular, a preferred core-shell structure includes a TFE homopolymer as a core part and a modified PTFE as a shell part.

Exemplary core-shell structures include (1) a structure in which the core part and the shell part are produced from different monomer compositions, (2) a structure in which the core part and the shell part are produced from the same monomer composition and are different in the standard specific gravity (SSG), and (3) a structure in which the core part and the shell part are produced from different monomer compositions and are different in the standard specific gravity.

Exemplary modified PTFE having a core-shell structure is an emulsion obtained by emulsion-polymerizing a monomer composition (TFE and, if needed, a modified monomer) for producing a core part and a monomer composition (TFE and, if needed, a modified monomer) for producing a shell part. The emulsion polymerization may be performed by a conventionally known method. The modified monomer may be the same as the modified monomer mentioned earlier.

The amount (modification content (% by mass)) of the polymerization unit (modified monomer unit) derived from a modified monomer in the modified PTFE in the total polymerization units (i.e., the total of polymerization unit (TFE unit) derived from TFE and modified monomer unit) is, though it depends on the kind of the modified monomer, preferably small so as not to impart the modified PTFE with melt flowability. The amount is preferably 0.05% by mass or less and more preferably 0.02% by mass or less, and preferably 0.0001% by mass or more. Further, in view of facilitating formation of a porous sheet from the modified PTFE, the amount of the modified monomer unit is preferably small. For example, in the case of using the perfluoro vinyl ether as the modified monomer, the upper limit of the amount is preferably 0.05% by mass and the lower limit thereof is more preferably 0.001% by mass. For another example, in the case of using hexafluoropropylene as the modified monomer, the upper limit of the amount is preferably 0.05% by mass and the lower limit thereof is more preferably 0.001% by mass.

The polytetrafluoroethylene has a standard specific gravity (SSG) of 2.14 to 2.28. With the standard specific gravity of the polytetrafluoroethylene within the above range, the resulting sheet has favorable mechanical strength and even in a case where a large amount of carbon black and graphite are contained, the resulting sheet has sufficient mechanical strength. Moreover, even in a case where a large amount of carbon black and graphite are contained, sheeting is easy. If the standard specific gravity is too large, sheeting may be difficult. The standard specific gravity is preferably 2.14 to 2.22. The upper limit of the standard specific gravity is more preferably 2.18, still more preferably 2.17, and further more preferably 2.165.

The standard specific gravity (SSG) is measured in conformity with ASTM D 4895-89. When the standard specific gravity is smaller, the molecular weight is higher.

The polytetrafluoroethylene preferably has a melting point in a range from 327°C to 345°C. The melting point is measured by differential scanning calorimetry (DSC) under the condition that the rate of temperature rise is set to 10°C/min.

The sheet of the present invention preferably contains polytetrafluoroethylene in an amount of not less than 20% by mass but less than 65% by mass relative to the total amount of polytetrafluoroethylene, carbon black, and graphite. If the amount of polytetrafluoroethylene is too large, the sheet may not have enough conductivity in the thickness direction thereof. In contrast, if the amount of polytetrafluoroethylene is too small, sheeting by stretching or extrusion described later may be difficult. The upper limit of the amount is more preferably 60% by mass, and still more preferably 55% by mass. The lower limit of the amount is more preferably 30% by mass, and still more preferably 40% by mass.

The sheet of the present invention contains carbon black and graphite.

The carbon black is a conductive material in the form of spherical or chain fine powder produced by vapor-phase thermal decomposition or incomplete combustion of natural gas or hydrocarbon gas. Examples of the carbon black include furnace black, channel black, acetylene black, and thermal black. In particular, preferred are acetylene black and furnace black as high conductivity is achieved.

The carbon black preferably has an average particle size of 70 nm or less from the standpoint of imparting the resulting sheet with high conductivity. The upper limit of the average particle size is more preferably 55 nm. The lower limit of the average particle size is preferably 10 nm and more preferably 20 nm. The average particle size is determined based on the particle size distribution measured by an ultracentrifugal automatic particle size distribution-measuring apparatus (CAPA-700 manufactured by HORIBA LTD., number of rotation: 700 rpm, medium: pure water, temperature: room temperature).

The carbon black preferably has dibutyl phthalate (DBP) oil absorption of 100 cm³/100 g or more. Carbon black having DBP oil absorption within the above range has a high structure and imparts the resulting sheet with high conductivity. The lower limit of the DBP oil absorption is more preferably 110 cm³/100 g. The DBP oil absorption is measured based on JIS K 6217-4.

The graphite is also referred to as black lead, and has a layered structure of the hexagonal system in which layers each forming a hexagonal huge net surface are laminated by van der Waals bonding.

The exemplary shapes of the graphite include spherical, scale, and plate shapes and indeterminate form. Preferably, the graphite has a scale or plate shape. Though increasing the amount of carbon black may be considered for improving the conductivity of the sheet, too large an amount of carbon black may lower the moldability of the sheet as carbon black has low apparent density. However, combination use with scale- or plate-shaped graphite enables improvement of the moldability of the sheet without lowering the conductivity thereof.

Here, the graphite in a scale or plate shape refers to graphite in which 50% by mass or more of graphite has a minimum diameter of 0.5 to 10 µm and a maximum diameter of 1 to 200 µm. The minimum diameter and the maximum diameter of the graphite are measured by scanning electron microscopy (SEM).

In the case where the graphite has a scale or plate shape, the aspect ratio (flatness) is preferably 5 or more. The aspect ratio refers to a ratio of the maximum diameter to the minimum diameter (maximum diameter/minimum diameter) of the scale- or plate-shaped graphite. The aspect ratio can be determined based on the maximum diameter and the minimum diameter measured by scanning electron microscopy (SEM), and the average value of the aspect ratios of five samples is employed here.

The graphite preferably has an average particle size of 50 µm or less. The graphite having an average particle size within the above range has a large specific surface area and can impart the resulting sheet with high conductivity. The average particle size is more preferably 30 µm or less and still more preferably 20 µm or less. The average particle size is preferably larger than 1 µm and more preferably larger than 5 µm. The average particle size is determined based on the particle size distribution measured by an ultracentrifugal automatic particle size distribution-measuring apparatus (CAPA-700 manufactured by HORIBA LTD., number of rotation: 700 rpm, medium: pure water, temperature: room temperature).

In the sheet of the present invention, the total amount of carbon black and graphite is more than 35% by mass of the total amount of polytetrafluoroethylene, carbon black, and graphite. If the total amount of carbon black and graphite is too small, the conductivity of the sheet in the thickness direction may not be sufficiently high. If the total amount is too large, sheeting by stretching or extrusion processing described later may be difficult. The lower limit of the total amount is preferably 40% by mass and more preferably 50% by mass. The upper limit of the total amount is preferably 80% by mass, more preferably 70% by mass, and still more preferably 65% by mass.

The mass ratio of carbon black and graphite is preferably 99/1 to 30/70. The mass ratio is more preferably 95/5 to 70/30.

The sheet of the present invention may contain other components as long as it contains the polytetrafluoroethylene, the carbon black, and the graphite.

Preferably, the sheet of the present invention further contains carbon fibers as they can impart the resulting sheet with still higher conductivity. The carbon fibers can be obtained by carbonizing organic polymer fibers. The organic polymer fibers are not particularly limited, and examples thereof include cellulose fibers, polyacrylonitrile [PAN] fibers, vinylon fibers, and heat resistant fibers. In the present invention, conductive carbon fibers are preferably used. In particular, conductive carbon fibers are preferably PAN fibers.

In a case where the sheet of the present invention contains carbon fibers, the amount of the carbon fibers is preferably 0. 5 to 10% by mass of the total amount of carbon black, graphite, and carbon fibers.

The sheet of the present invention is produced by preparing a sheet composition containing polytetrafluoroethylene, carbon black, graphite, and if needed, other components (e.g., carbon fibers) and then sheeting the sheet composition. The sheet composition can be prepared by mixing polytetrafluoroethylene that is obtained by emulsion polymerization or suspension polymerization with carbon black, graphite, and if needed, other components.

In a case where the polytetrafluoroethylene is obtained by emulsion polymerization, the resulting polytetrafluoroethylene is in the form of a latex containing polymer particles dispersed therein after completion of the emulsion polymerization reaction. The polymer particles in the latex may be referred to as latex particles or primary particles. The primary particles commonly have an average particle size of 0.1 to 0. 5 µm. After completion of the emulsion polymerization reaction, the latex particles are coagulated, washed properly, dried, and pulverized as required to give polytetrafluoroethylene fine powder. The polymer particles resulting from the coagulation may be referred to as secondary particles. The secondary particles commonly have an average particle size of 20 to 1000 µm.

The means of the coagulation is not particularly limited and a conventionally known means may be used. For example, the latex particles are blended with an electrolyte (e.g., inorganic salt, acid) or a water-soluble organic solvent (e.g., methanol, acetone) and stirred heavily. Preferred is the stirring. In view of easy coagulation, the latex subjected to coagulation preferably does not contain a nonionic surfactant and an anionic surfactant.

Thus obtained polytetrafluoroethylene fine powder may be mixed with carbon black and graphite (and other components) to give a sheet composition. From the standpoint of more sufficiently disperse carbon black and graphite (and other components) in the sheet, after the emulsion polymerization, carbon black and graphite (and other components) are preferably mixed with polytetrafluoroethylene at the time of coagulation thereof to give a sheet composition. In other words, polytetrafluoroethylene is preferably co-coagulated with carbon black and graphite (and other components) to give a sheet composition.

In the case of co-coagulation, carbon black and graphite (and other components) are added to polytetrafluoroethylene latex resulting from the emulsion polymerization and then subjected to coagulation. The carbon black and graphite (and other components) added to the latex are attached to the surface of polytetrafluoroethylene latex particles. The latex particles with carbon black and graphite (and other components) attached to the surface thereof are coagulated as primary particles in the coagulation to form secondary particles. The resulting secondary particles have carbon black and graphite (and other components) on the interface between primary particles. In other words, the secondary particles have carbon black and graphite (and other components) inside thereof.

In the case of co-coagulation, carbon black and graphite (and other components) are preferably dispersed in water before addition to the polytetrafluoroethylene latex from the standpoint of improving the dispersibility in the polytetrafluoroethylene latex so that the carbon black and graphite (and other components) can be sufficiently attached to the surface of the latex particles. The dispersion method employed is heavy stirring with a mixer or a ball mill depending on the kind and size of carbon black and graphite (and other components).

The co-coagulation is performed in the presence or absence of a surfactant. The amount of the surfactant is preferably 1% by mass or less of the amount of polytetrafluoroethylene. If the amount of the surfactant is too large, the amount of surfactant interposed between polytetrafluoroethylene and carbon black and graphite (and other components) is too large in the co-coagulation thereof, so that polytetrafluoroethylene latex particles are less coagulated. The co-coagulation is more preferably performed in the absence of a surfactant.

The polytetrafluoroethylene-containing powder (sheet composition) resulting from the co-coagulation may be prepared by pulverizing as mentioned above. The cracking method is not particularly limited, and a common crasher may be used. If needed, the particle size may be set uniform.

Thus obtained polytetrafluoroethylene-containing powder enables achievement of both conductivity and load resistance when used in production of a sheet. The mechanism allowing exertion of such effect is, though not clearly known, presumably as follows.

Specifically, in the case of producing the sheet of the present invention from the polytetrafluoroethylene-containing powder resulting from the co-coagulation, a material including the polytetrafluoroethylene-containing powder is stretched, rolled, or extruded as described later in the production process. The carbon black and graphite are mixed among the polytetrafluoroethylene particles to form a matrix by the external force of the stretching, rolling, or extrusion as described above and they themselves are subjected to that external force. Under the external force of the stretching, rolling, or extrusion, graphite itself is not stretched or hardly stretched, and carbon black itself is stretched to be formed into an acicular shape extending in the direction of the external force. The sheet thus obtained through stretching, rolling, or extrusion contains graphite having an original shape or hardly deformed shape and carbon black having a long stretched shape, so that the carbon black can perform, when the current is applied, bridging of graphite to improve conductivity.

The polytetrafluoroethylene-containing powder obtained by the co-coagulation contains carbon black and graphite (and other components) as secondary particles, and therefore, the carbon black and graphite (and other components) are sufficiently dispersed in a matrix formed of polytetrafluoroethylene particles upon the stretching or extrusion. Accordingly, the resulting sheet is less likely to have cracks and have excellent load resistance, while having excellent conductivity.

In a case where the polytetrafluoroethylene is prepared by suspension polymerization, the resulting raw powder is crushed to the size of several tens to several hundreds of micrometers and then granulated and dried to give polytetrafluoroethylene molding powder. Thus obtained polytetrafluoroethylene molding powder is dry-mixed with carbon black and graphite (and other components) to give a sheet composition.

Accordingly, the polytetrafluoroethylene used may be one obtained by emulsion polymerization or one obtained by suspension polymerization. From the standpoint of easily forming a porous sheet, polytetrafluoroethylene obtained by emulsion polymerization is preferably used.

The sheet composition may further contain various additives other than polytetrafluoroethylene, carbon black, graphite, and carbon fibers according to the application thereof. The additives are not particularly limited, and examples thereof include, in the case where the sheet composition is subjected to paste extrusion, extrusion aids commonly used for paste extrusion; fire-resistant particles such as alumina, boron nitride, and silicon carbide particles; hydrophilic fine particles such as silica, polyphenylene oxide, polyphenylene sulfide particles; and fillers such as glass fibers. Moreover, the sheet composition may further contain, as the additive, conductive materials other than carbon black, graphite, and carbon fibers if needed.

In the case of using an extrusion aid, the amount thereof is preferably 16 to 50% by mass of the total amount of polytetrafluoroethylene, carbon black, and graphite (and carbon fibers, if needed). The amount is more preferably 30 to 40% by mass.

The sheet of the present invention is preferably obtained by sheeting the sheet composition. Here, the "sheeting" refers to molding into a sheet shape. The sheet shape encompasses not only the shape commonly recognized as a sheet but also various flat or thin shapes (e.g., ribbon shape, strip shape, film shape, T-shape, C-shape, E-shape), and also encompasses a shape having such a flat shape as it is, curled into a helicoid shape, or wound into a roll.

The sheeting is preferably performed by stretching or extrusion. Thus formed sheet has a porous structure and is excellent in not only breathability but also conductivity in the thickness direction. An index of the conductivity is a volume resistivity. The sheet of the present invention produced by the stretching or extrusion has a volume resistivity in the thickness direction of, for example, 0.1 Ω·cm or less.

As long as stretching or extrusion is included, the sheeting may further include other steps.

The stretching method may be a conventionally known method such as uniaxial stretching and biaxial stretching. The extrusion method employed may be a conventionally known method commonly employed for extrusion of polytetrafluoroethylene, such as ram extrusion and paste extrusion. Since appropriate fibrillation is enabled, preferred is paste extrusion.

In a case where the sheet composition contains polytetrafluoroethylene obtained by emulsion polymerization, the sheeting preferably include the steps of processing the sheet composition to a sheet-shaped product that is thicker than the desired thickness by extrusion and/or rolling and then stretching the resulting sheet-shaped product to have a desired thickness under predetermined conditions. For one example of such sheeting, the sheet composition is molded into a round pillar shape by paste extrusion, rolled by a conventionally known method, and after removing the extrusion aid by devolatilization, stretched under predetermined conditions.

The rolling is preferably performed at 40 to 100°C.

The stretching is preferably performed at a temperature not lower than 200°C but not higher than the melting point of polytetrafluoroethylene. The upper limit of the temperature is more preferably 320°C. The sheet-shaped product is preferably stretched to be about 1.2 to 10 times larger in the rolling direction. In addition to the stretching in the rolling direction, the sheet-shaped product may be stretched to be about 1.2 to 10 times larger in the lateral direction (direction substantially orthogonal to the rolling direction).

The stretching is preferably performed on the unfired sheet-shaped product. The term "unfired" refers to a state where the molded product is not subjected to firing of heating to a temperature equal to or higher than the melting point of polytetrafluoroethylene upon production thereof.

In the case of containing polytetrafluoroethylene obtained by emulsion polymerization, the sheet composition may be formed into a sheet not by stretching but by extrusion. In this case, after extrusion of the sheet composition into a sheet shape having a desired thickness, the extrusion aid may be removed by volatilization. Such a process forms a void at a position where the extrusion aid have been present in the sheet, and therefore, the sheet has a porous structure. Here, the amount of the extrusion aid is preferably larger than usual for the purpose of forming holes having a sufficient size.

In the case where the sheet composition contains polytetrafluoroethylene obtained by suspension polymerization, the sheeting preferably includes the steps of processing the sheet composition to a sheet-shaped product that is thicker than the desired thickness through compression molding and firing and then stretching the resulting sheet-shaped product to have a desired thickness under predetermined conditions. For forming the sheet-shaped product, the sheet composition may be directly formed into a sheet shape by the compression molding. Alternatively, the sheet composition is formed into a round pillar shape by the compression molding and, after firing, skived to give a sheet-shaped product. The skiving is commonly performed as follows. A molded product is prepared by a common method in which the sheet composition is compression-molded into, for example, a round pillar shape and then fired. The molded product is set on a lathe and rotated so that a thin film is sliced from the side face of the molded product in a similar manner as *"Katsuramuki"* (rotary cutting) of a Japanese radish. In this manner, a sheet or a film is obtained.

The above-mentioned compression molding, firing, and skiving may be performed under conventionally known conditions. The stretching is preferably performed at a temperature not lower than 200°C but not higher than the melting point of polytetrafluoroethylene. The upper limit of the temperature is more preferably 320°C. The sheet composition is preferably stretched to be about 1.1 to 5 times larger in one direction and stretched to be about 1.0 to 3 times larger in another direction (e.g., direction substantially orthogonal to the one direction).

In both cases where the sheet composition contains polytetrafluoroethylene obtained by emulsion polymerization and where the sheet composition contains polytetrafluoroethylene obtained by suspension polymerization, the sheeting preferably includes the step of stretching.

The sheet of the present invention has high conductivity in the thickness direction. Specifically, the sheet preferably has a volume resistivity in the thickness direction of 0.1 Ω·cm or less. With the volume resistivity in the thickness direction within the above range, the obtained conductivity is sufficient for an electrode of fuel cells or the like. The volume resistivity is more preferably 0.01 Ω·cm or less and still more preferably 0.005 Ω·cm or less.

The volume resistivity can be determined by the four potential method.

The sheet of the present invention preferably has a resistance value measured by the later-described method of 0.13 Ω or less. The upper limit of the resistance value is more preferably 0.1 Ω.

The sheet of the present invention has a porous structure. In other words, the sheet has voids (holes) which gas can pass through. The size of the void is preferably 0.1 to 5 µm. The size is more preferably 0.4 to 2 µm and still more preferably 0.7 to 1.5 µm.

The size of the void can be measured with a pore distribution analyzer by the bubble point method.

The sheet has a thickness of preferably 150 µm or less. With the thickness of the sheet within the above range, graphite is more efficiently exposed on the both faces of the sheet. The thickness of the sheet is more preferably 120 µm or less and still more preferably 100 µm or less. The thickness of the sheet is preferably 50 µm or more and still more preferably 60 µm or more.

The sheet of the present invention not only has high conductivity in the thickness direction but also has excellent breathability, water repellency, corrosion resistance, and flexibility, and therefore is usable for variety of applications (e.g., electrode material, material of heating element). In particular, the sheet of the present invention is suitably used for an electrode of fuel cells or the like. The present invention also encompasses an electrode produced from the sheet of the present invention.

The electrode is not particularly limited, and examples thereof include electrodes of fuel cells, aqueous hydrogen peroxide generators, electrodes for electrolysis, plating, common cells and the like. Among these, the electrode is preferably an electrode of fuel cells, in particular, a gas diffusion layer electrode of fuel cells.

The electrode preferably includes the sheet of the present invention and an electrode catalyst layer, and may be anode or cathode. Here, the anode is formed of an anode catalyst layer and has proton conductivity. The cathode is formed of a cathode catalyst layer and has proton conductivity. The sheet of the present invention is bonded as a gas diffusion layer to the outer surface of each of the anode catalyst layer and the cathode catalyst layer to give the electrode of the present invention.

The anode catalyst layer contains a catalyst that can easily generate protons by oxidizing fuels (e.g., hydrogen). The cathode catalyst layer contains a catalyst that generates water by reacting protons and electrons with an oxidant (e.g., oxygen, air). For each of the anode and the cathode, a favorable catalyst is platinum or an alloy of platinum and ruthenium or the like, and is preferably in the form of catalyst particles of 10 to 1000 angstrom or less. Such catalyst particles are preferably supported on conductive particles having a size of about 0.01 to 10 µm, such as furnace black, channel black, acetylene black, carbon black, activated charcoal, and black lead. The amount of the supported catalyst particles relative to the projected area of the catalyst layer is preferably not less than 0.001 mg/cm² but not more than 10 mg/cm².

The electrode can form a membrane electrode assembly (often abbreviated as "MEA") together with a solid polymer electrolyte membrane. As an exemplary MEA, one including the electrodes of the present invention as an anode and a cathode and a polymer electrolyte membrane closely held between the anode and cathode may be mentioned.

Preferable examples of the polymer electrolyte include organic polymers having a polar group such as a strong acidic group (e.g., sulfone group, phosphate group) and weak acidic group (e.g., carboxyl group). Examples of the organic polymers include aromatic condensation polymers such as sulfonated poly(4-phenoxybenzoyl-1,4-phenylene) and alkyl-sulfonated polybenzoimidazole, sulfone group-containing perfluorocarbon (Nafion (manufactured by Du Pont: registered trademark), Aciplex (manufactured by Asahi Kasei Chemicals Corporation)), and carboxyl group-containing perfluorocarbon (Flemion S film (manufactured by ASAHI GLASS Co., LTD. : registered trademark)).

The method for producing MEA is specifically described, for example, in JOURNAL OF APPLIED ELECTROCHEMISTRY, 22 (1992) p.1-7.

The MEA is, for example, usable for a solid polymer-type fuel cell. The solid polymer electrolyte-type fuel cell is not particularly limited as long as it includes the MEA, and may include components commonly constituting a solid polymer electrolyte-type fuel cell (e.g., electrode, current collector, gas diffusion layer, separator).

A fuel cell including the electrode of the present invention is also encompassed by the present invention.

### - Advantageous Effects of Invention

The sheet of the present invention having the above structure has high conductivity in the thickness direction and also is excellent in the breathability, water repellency, corrosion resistance, and flexibility. The sheet is suitably used for an electrode of fuel cells and the like, especially for a gas diffusion layer electrode of fuel cells.

### DESCRIPTION OF EMBODIMENTS

The present invention is more specifically described based on, but not limited to, examples.

Respective properties are measured as follows.

### (Measurement of standard specific gravity)

The standard specific gravity (SSG) was measured in conformity with ASTM D 4895-89.

### (Measurement of resistance value)

A copper foil having a thickness of 50 µm was placed on a stainless steel block (40 mm × 40 mm × 20 mm). A rectangular parallelpiped iron was prepared which had a length of 30 mm and a bottom face in a size of 2 mm × 8 mm. A conductive sheet (sample) was placed between the bottom face of the rectangular parallelpiped iron and the copper foil, and the rectangular parallelpiped iron was pressed onto the conductive sheet with a load of 1600 g. In such a state, the resistance value between the rectangular parallelpiped iron and the copper foil was measured. A resistance measuring instrument used was a digital multimeter VOAC 92 manufactured by IWATSU ELECTRIC CO., LTD.

### Example 1

A 5-liter poly bottle was charged with 1620 g of water, 144 g of carbon black 3030B (DBP oil absorption of 130 cm³/100g, average particle size of 55 nm) manufactured by Mitsubishi Chemical Corporation, and 36 g of graphite BF-3AK (scaly graphite, average particle size of 3 µm) manufactured by Chuetsu Graphite Works Co., Ltd. The mixture was stirred to prepare an aqueous dispersion. The aqueous dispersion was blended with 720 g of a PTFE aqueous dispersion containing polytetrafluoroethylene (PTFE (modification content of 0.00% by mass)) having a standard specific gravity of 2.16 and 25% by mass of a resin component. The mixture was stirred so that PTFE was coagulated. The coagulated product was dried in a drying furnace at 180 °C for 10 hours so that moisture was removed, thereby giving a mixed powder.

An amount of 350 g of the mixed powder was mixed with 193 g of Isopar G (hydrocarbon solvent manufactured by Exxon Mobil Corporation) as an extrusion aid for paste extrusion molding, followed by aging for 10 hours. The resulting powder mixed with the aid was pre-molded and extruded through a paste extruding machine (φ80 cylinder, φ18 mandrel, inner diameter of the die of φ12 mm). The paste was extruded under an extrusion pressure of 7 ton. The φ12 extruded product was warmed to 70°C and then rolled in six steps with a calender roll (φ200 mm) at 80°C. The sheet was heated in an electric furnace at 180°C for two hours, so that the extrusion aid was removed. The resulting sheet was further stretched with a biaxial stretching machine to be 1.2 times larger in the lengthwise direction and 1.2 times larger in the width direction under the conditions of 250°C and 500 mm/sec. The sheet under stretching was fired at 350°C for five minutes to give a conductive sheet in a size of 100 mm × 180 mm × 100 µm. The resistance value measured by the above-mentioned method was 0.07 Ω.

### Examples 2 to 5

Conductive sheets having a thickness of 100 µm were prepared in the same manner as in Example 1, except that the ratio (% by mass) of PTFE (modification content of 0.00% by mass), carbon black, and graphite was changed as shown in Table 1. The resistance values of respective sheets were measured. Table 1 shows the results.

### Comparative Example 1

A conductive sheet having a thickness of 100 µm was prepared in the same manner as in Example 1, except that the amount of carbon black was changed to 180 g and the amount of graphite was changed to 0 g. The resistance value thereof was 0.24 Ω.

### Example 6

A conductive sheet having a thickness of 100 µm was prepared in the same manner as in Example 1, except that carbon black was changed to one having an average particle size of 30 nm and DBP oil absorption of 115 cm³/100 g. The resistance value thereof was 0.15 Ω.

### Comparative Example 2

A conductive sheet was tried to be prepared in the same manner as in Example 1, except that the amount of carbon black was changed to 260 g, the amount of graphite was changed to 0 g, and the amount of PTFE aqueous dispersion was changed to 228 g. The extrusion-molded product of the paste, however, was discontinuous, and the rolled and stretched sheet was discontinuous and not uniform.

### Examples 7 and 8

Conductive sheets having a thickness of 100 µm were prepared in the same manner as in Example 1, except that the ratio (% by mass) of PTFE, carbon black, and graphite was changed as shown in Table 1, and the resistance values thereof were measured. Table 1 shows the results.

### Examples 9 and 10

Conductive sheets having a thickness of 100 µm were prepared in the same manner as in Example 1, except that carbon black used was DENKA BLACK (trade name, powdery material, average particle size of 35 nm, manufactured by DENKI KAGAKU KOGYO KABUSHIKI KAISHA), graphite used was UCP (trade name, scaly graphite, aspect ratio of 5 or more, average particle size of 3 µm or more, manufactured by Nippon Graphite Industries, ltd.), and the ratio (% by mass) of PTFE, carbon black, and graphite was changed as shown in Table 1, and the resistance values thereof were measured. Table 1 shows the results.

### Example 11

A conductive sheet having a thickness of 100 µm was prepared in the same manner as in Example 1, except that the PTFE aqueous dispersion was changed to one containing PTFE (modification content of 0.00% by mass) having a standard specific gravity of 2.16, 28% by mass of a resin component, and 0% by mass of a nonionic surfactant, and that the ratio (% by mass) of PTFE, carbon black, and graphite was changed as shown in Table 1, and the resistance value thereof was measured. Table 1 shows the result.

### Comparative Example 3

A conductive sheet having a thickness of 100 µm was prepared in the same manner as in Example 1, except that the PTFE aqueous dispersion was changed to one containing PTFE (modification content of 0.00% by mass) having a standard specific gravity of 2.16, 28% by mass of a resin component, 0% by mass of a nonionic surfactant, and 0% by mass of an anionic surfactant, and the ratio (% by mass) of PTFE, carbon black, and graphite was changed as shown in Table 1, and the resistance value thereof was measured. Table 1 shows the result.

**[Table 1]**

| | **Example 1** | **Example 2** | **Example 3** | **Example 4** | **Example 5** | **Example 6** | **Example 7** | **Example 8** | **Example 9** | **Example 10** | **Example 11** | **Comparative Example 1** | **Comparative Example 2** | **Comparative Example 3** |
|---|---|---|---|---|---|---|---|---|---|---|---|---|---|---|
| **PTFE (wt%)** | **50** | **40** | **30** | **40** | **30** | **50** | **35** | **30** | **36** | **30** | **35** | **60** | **18** | **35** |
| **Carbon black (wt%)** | **40** | **40** | **40** | **50** | **60** | **40** | **55** | **55** | **65** | **55** | **55** | **60** | **82** | **65** |
| **Graphite (wt%)** | **10** | **20** | **30** | **10** | **20** | **10** | **10** | **15** | **10** | **15** | **10** | **0** | **0** | **0** |
| **Resistance value (Ω/16mm²)** | **0.07** | **0.06** | **0.05** | **0.08** | **0.05** | **0.15** | **0.05** | **0.04** | **0.05** | **0.04** | **0.05** | **0.24** | **-** | **0.20** |

## Claims

1. A sheet containing polytetrafluoroethylene, carbon black, and graphite,
the polytetrafluoroethylene having a standard specific gravity of 2.14 to 2.28,
a total amount of the carbon black and the graphite being more than 35% by mass of a total amount of the polytetrafluoroethylene, the carbon black, and the graphite.

2. The sheet according to claim 1,
wherein the carbon black and the graphite have a mass ratio of 99/1 to 30/70.

3. The sheet according to claim 1 or 2,
wherein the polytetrafluoroethylene is a tetrafluoroethylene homopolymer or a modified polytetrafluoroethylene including a polymerization unit derived from a modified monomer in an amount of 0.02% by mass or less of the total polymerization units.

4. The sheet according to any one of claims 1, 2, and 3,
wherein the polytetrafluoroethylene has a standard specific gravity of 2.14 to 2.22.

5. The sheet according to any one of claims 1, 2, 3, and 4,
wherein the polytetrafluoroethylene, the carbon black, and the graphite are mixed by co-coagulation.

6. The sheet according to any one of claims 1, 2, 3, 4, and 5,
wherein the carbon black has an average particle size of 70 nm or less.

7. The sheet according to any one of claims 1, 2, 3, 4, 5, and 6,
wherein the graphite has an average particle size of 50 µm or less.

8. The sheet according to any one of claims 1, 2, 3, 4, 5, 6, and 7,
wherein the graphite has a scale shape or a plate shape.

9. An electrode comprising
the sheet according to any one of claims 1, 2, 3, 4, 5, 6, 7, and 8.

10. A fuel cell including
the electrode according to claim 9.
